# EUROPEAN PATENT SPECIFICATION

(11) **EP 4 563 479 B1**
(45) Date of publication and mention of the grant of the patent: **02.09.2026**
(21) Application number: 24460005.2
(22) Date of filing: 18.01.2024
(51) Int. Cl.: B65B 25/04, B65B 55/08, B65B 55/10, B65B 43/44, B65B 43/52

(54) **A PROCESS LINE FOR THE PACKAGING OF PRODUCTS, IN PARTICULAR POTATOES, INTO BULK CONTAINERS, IN PARTICULAR PALLET BOXES**
VERFAHREN ZUM VERPACKEN VON PRODUKTEN, INSBESONDERE KARTOFFELN, IN SCHÜTTGUTBEHÄLTER, INSBESONDERE PALETTENSCHACHTELN
CHAÎNE DE TRAITEMENT POUR L'EMBALLAGE DE PRODUITS, EN PARTICULIER DE POMMES DE TERRE, DANS DES CONTENEURS EN VRAC, EN PARTICULIER DES CAISSES-PALETTES

(30) Priority: 30.11.2023 PL 44691523
(43) Date of publication of application: 04.06.2025
(73) Proprietor: KMK Agro D. Kazmierczak C. Madry M. Kazmierczak Sp. J., 63-000 Sroda Wielkopolska (PL)
(72) Inventor: Kazmierczak, Dariusz, 63-012 Dominowo (PL); Krajewski, Adrian, 63-000 Sroda Wielkopolska (PL)
(74) Representative: Urbanska-Luczak, Barbara

(56) References cited:
- EP-A1- 0 584 425
- CN-A- 113 398 291

## Description

The subject of the invention is a process line for the packaging of products, in particular potatoes, into bulk containers, in particular pallet boxes. Packaging systems, in particular for agricultural products packaged in bulk constitute an area of technology.

The state of the art comprises many solutions for the packaging of agricultural products, including single devices and process lines consisting of individual systems, conveyors, filling devices etc. Devices for washing of packaging and containers are also known, using detergents and various types of chemicals.

The European patent EP3209565B1 demonstrates an apparatus for the automatic dosing of a succession of definite quantities, as a weight, of agricultural products into a plurality of respective containers (A, B, C...), including a first conveying means, preferably formed by a belt. The solution is characterized in that it comprises:
- a second conveying means able of being automatically loaded with agricultural products supplied by said first conveying means,
- a third conveying means able of being loaded with the products supplied by said second conveying means,
- weighing means able of weighing the full weight on the whole laying on said second conveying means,
wherein said third conveying means is able to transfer the products laying on it into a succession of said single container, and wherein a fourth conveying means is arranged in a position adjacent to said second conveying means, said fourth conveying means being able to convey a numerically controlled quantity (N) of similar agricultural products into said third conveying means, said numerically controlled quantity (N) being determined as a function of the of the weight of the products on the whole present on said second conveying means

EP0584425A1 discloses a machine for carrying out the automatic filling of boxes for industrial products and fruit. CN113398291A discloses a cold chain food and outer packaging system.

A conducted review of the state of the art demonstrated that no solutions are known which constitute an integrated technology for packaging in a process line, equipped with a system for disinfecting of packaging and that integration of disinfection systems known from the state of the art with a product packaging line is problematic, hinders the optimisation of the process line through the need to apply complicated designs and sometimes prevents the automation of packaging processes with a disinfection system installed in the process line.

The solution according to the invention eliminates the drawbacks and disadvantages resulting from the use of solutions from the state of the art.

The essence of the invention, which is a process line for the packaging of products, in particular potatoes, into bulk containers, in particular pallet boxes, comprised of a system of conveyors and devices for transporting and filling of containers with a product and a system for controlling of individual devices consists of the line containing at least one container disinfection system, advantageously four container disinfection systems, most advantageously when the container disinfection systems are placed in series in relation to each other, where on one side of the container disinfection system a system of longitudinal conveyors is located, advantageously roller conveyors, which feed in containers from a destacking system under a specific container disinfection system, whereas on the other side of the container disinfection system a parallel system of longitudinal conveyors is located, advantageously roller conveyors, which feed disinfected containers to the system for the filling of the container with the product, whereas both systems of longitudinal conveyors, advantageously roller conveyors, are connected with each other with at least one transverse conveyor system, advantageously a chain conveyor, which passes under at least one container disinfection system and is installed in such a manner that it starts and ends respectively under the longitudinal conveyors, advantageously roller conveyors, and every of the longitudinal conveyor systems is attached to a raising frame by a system of pull rods and/or actuators, which enable respectively raising and/or lowering of the longitudinal conveyors, advantageously roller conveyors, below the plane in which guide rails of the transverse conveyor system, advantageously chain conveyor guide rails, are located.

It is advantageous when the destacking system consists of a lift, to which grabbing clamps are attached, advantageously connected with the actuator using a grabbing clamp rotation chain, with the lift being mounted in a load-bearing frame of the destacking system, where in the lower zone of the load-bearing frame a roller conveyor is installed, with the lift raising/lowering mechanism constituting a lift drive, advantageously an electric motor, lift chain and a system of rollers containing at least one guide roller moving on a guide rail attached to the load-bearing frame and a tensioning system, advantageously containing a lift chain upper tensioner and lift chain lower tensioner and a lift chain rewinding axle, whereas the mechanism for the transporting of containers, in particular pallet boxes, in the horizontal plane constitutes a roller conveyor drive system with a chain driving the rollers of the roller conveyor, whereas it is particularly advantageous when the roller conveyor of the destacking system is connected with the roller conveyor of the longitudinal conveyor system which feeds the container, in particular a pallet box, to the disinfection system. Moreover, it is advantageous when buffers for the forklift are attached to the load-bearing frame, as well as it is advantageous when a lift powering element guide is attached to the load-bearing frame.

It is also advantageous when the system of longitudinal conveyors consists of a modular system of conveyors which feed containers from the destacking system to the given container disinfection system and of a modular system of conveyors which feed disinfected containers to the system for filling the containers with the product, where each of the longitudinal conveyor modules contains a roller conveyor connected with a transporter raising frame, whereas the transporter raising system constitutes a raising/lowering actuator, a raising shaft, a raising guide, a synchronisation pull rod and a raising pull rod, and the mechanism for transporting of containers, in particular pallet boxes, over the conveyor rollers constitutes a roller conveyor drive connected with the rollers through a drive transmission chain, whereas advantageously every module of the longitudinal conveyors has a sensor for the detection of containers, in particular pallet boxes.

It is also advantageous when the system for the disinfection of containers, in particular pallet boxes, has the form of a closing dome placed between the system of the longitudinal conveyors which feed in containers from the destacking system under a given container disinfection system and the system of longitudinal conveyors which feed the disinfected containers to the system for the filling of container with the product, with the dome of the disinfecting system consisting of a dome bottom and a dome cover, advantageously cuboidal one, where the dome cover is installed in a sliding manner in relation to the dome bottom, whereas the dome cover consists of an upper base and side walls permanently and tightly connected to it, whereas to the dome bottom and/or to at least one of the walls of the dome cover conduits are attached, which supply ozone from an ozone generator to the inside of the dome, and a system for distributing of ozone and a source of bactericidal light and/or a source of virucidal light, advantageously an UV-C lamp, are installed inside the dome, whereas the ozone distribution system consists of at least one conduit, in the zone of which is installed at least one fan, whereas advantageously the dome bottom consists of a lower base of the dome bottom and side walls permanently and tightly connected to it, where in any of the side walls of the dome bottom and/or the dome cover there are cut-outs, which enable installation of guide rails or other elements of the transport conveyor, advantageously chain conveyor guide rails, for feeding the disinfected container, advantageously a pallet box, into the dome whereas between the dome bottom and the dome cover a dome seal is installed, and elements of a seal pressure mechanism are attached to the dome bottom and/or to the side walls of the dome cover. It is particularly advantageous, when to the upper base of the dome cover an insert is attached, advantageously cuboid, which decreases the volume of the disinfection chamber within the dome walls, in which the disinfected container, in particular a pallet box, is placed, and moreover a source of bactericidal light and/or a source of virucidal light, advantageously an UV-C lamp is attached to any of the walls of the insert. It is additionally advantageous when the dome, consisting of a dome bottom and a dome cover, is attached to the system frame in such a manner that the dome bottom is permanently connected to the frame, whereas the dome cover is attached to the frame in a sliding manner, whereas the system according to the invention has a dome cover raising drive, most advantageously an electric motor, which is connected to the dome cover by a raising system, most advantageously with a tensioning system, and the dome cover raising system constitutes a belt-based raising system, where guides, advantageously guide rods, are attached to the vertical elements of the frame, while to the external elements of the dome cover guide rollers are attached, and moreover to the vertical elements of the frame at least one medium feeding guide and at least one position sensor, advantageously two positions sensors, are attached, with most advantageously a dome cover lower position sensor being attached in the dome bottom zone, and a dome cover upper position sensor being attached above it.

It is also advantageous when the system of transverse conveyors - placed between the given module of the system of longitudinal conveyors, advantageously roller conveyors, which feed containers from the destacking system under the container disinfection system, and the corresponding module of the longitudinal conveyors, advantageously roller conveyors which feed the disinfected containers to the system for filling the container with the product, the system of transverse conveyors passing through the container, in particular pallet box, disinfection system - consists of mutually parallel chain conveyor guide rails connected to each other with middle legs, acting as a load-bearing frame and local supports, in which guide rails a conveyor chain is located, passing around guide pulleys and a transport chain tensioner system, and the drive system constitutes a combination of a conveyor drive, advantageously an electric motor, with a chain drive wheel using a drive chain, where the chain drive wheel is connected to the transport chain drive shaft through a shaft coupling and a rail connecting shaft.

It is also advantageous when the system for filling the container with the product is a tilting platform attached to a load-bearing frame, to which frame in the lower zone a roller conveyor is attached, and in the upper zone of the frame a system of conveyors is attached, advantageously a side conveyor for the product and a movable conveyor of the product, where the movable conveyor for the product is connected to the drive through a drive shaft of the movable conveyor and the drive belt of the movable conveyor, and the tilting platform, which possesses pallet box blocking clamps, connected to a blocking clamp actuator, is attached to the frame in a rotating manner on an axis of its body, whereas the tilting platform is connected the tilting platform's drive, advantageously an electric drive, through a belt attached to a belt grip, passing around rollers to a belt reel. It is additionally advantageous when the system for filling the container with the product in the zone of product conveyors has a subsystem for controlling the amount of product in the container, advantageously containing an ultrasound analogue sensor, and in the tilting platform zone, advantageously to its lower part, wheels for the positioning of the container, in particular pallet box, and a container, in particular pallet box, position sensor are attached.

It is also advantageous when a conveyor feeding the product, advantageously a paddle belt conveyor, is attached to the system for filling the container with the product.

It is also advantageous when the stacking system consists of a lift, to which grabbing clamps are attached, advantageously connected with the actuator using a grabbing clamp rotation chain, with the lift being mounted in a load-bearing frame of the destacking system, where in the lower zone of the load-bearing frame a roller conveyor is installed, with the lift raising/lowering mechanism constituting a lift drive, advantageously an electric motor, lift chain and a system of rollers containing at least one guide roller moving on a guide rail attached to the load-bearing frame and a tensioning system, advantageously containing a lift chain upper tensioner and a lift chain lower tensioner and a lift chain rewinding axle, whereas the mechanism for the transporting of containers, in particular pallet boxes, in the horizontal plane constitutes a roller conveyor drive system with a chain driving the rollers of the roller conveyor. It is additionally advantageous when the roller conveyor of the stacking system is connected with an output roller conveyor of the system for the filling of the container, in particular of a pallet box, with product.

The use of the solution according to the invention, the essence of which was presented above, enables achieve the following technical and utility effects:
- automation of packaging processes in a single process chain with a process of effective disinfection of containers, without the need to use closed loops of the washing medium,
- elimination of the need to use detergents and chemical agents, as an effect improvement of the environmental impact of the process,
- reduction of the time of individual processes and improvement of process effectiveness,
- ability to adapt the process line, due to its modular construction, to individual needs of the user, taking into account the desired efficiency of the process.

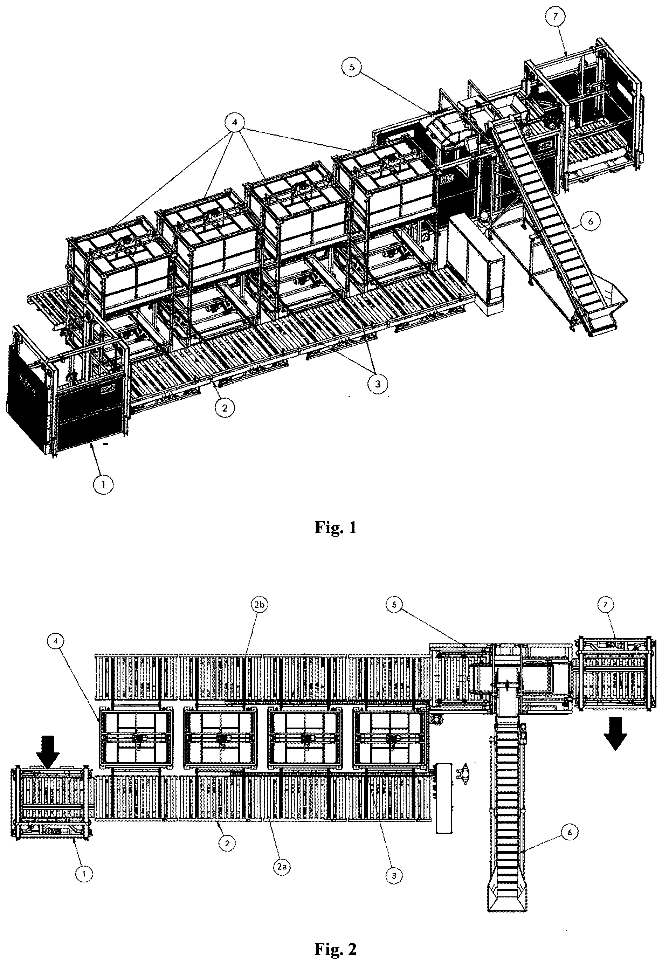

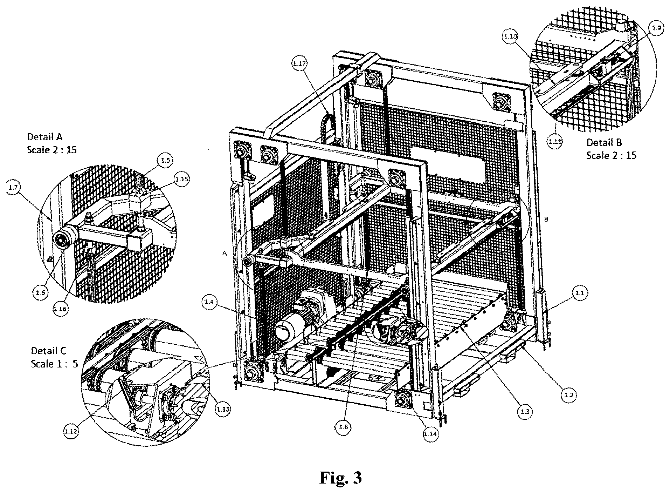

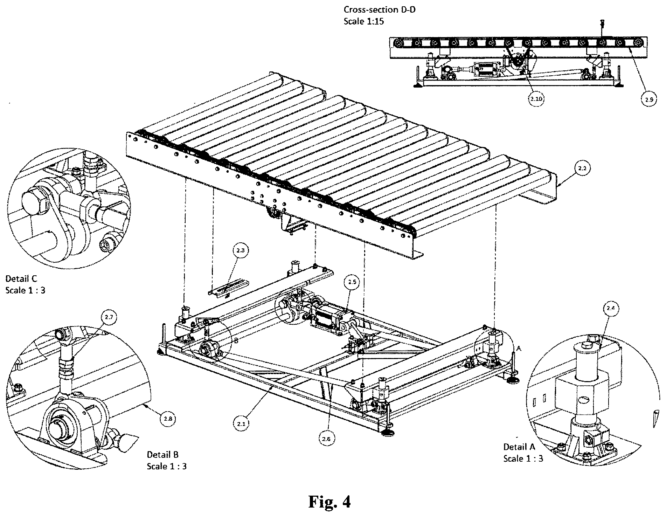

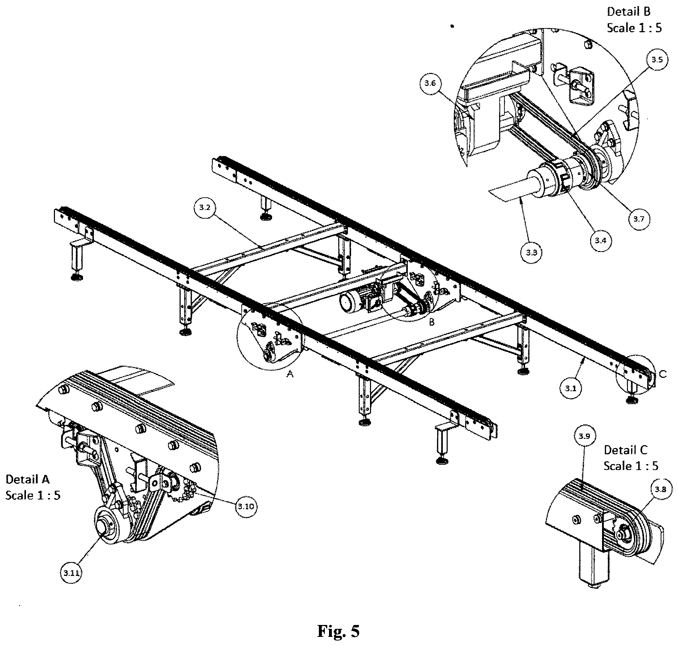

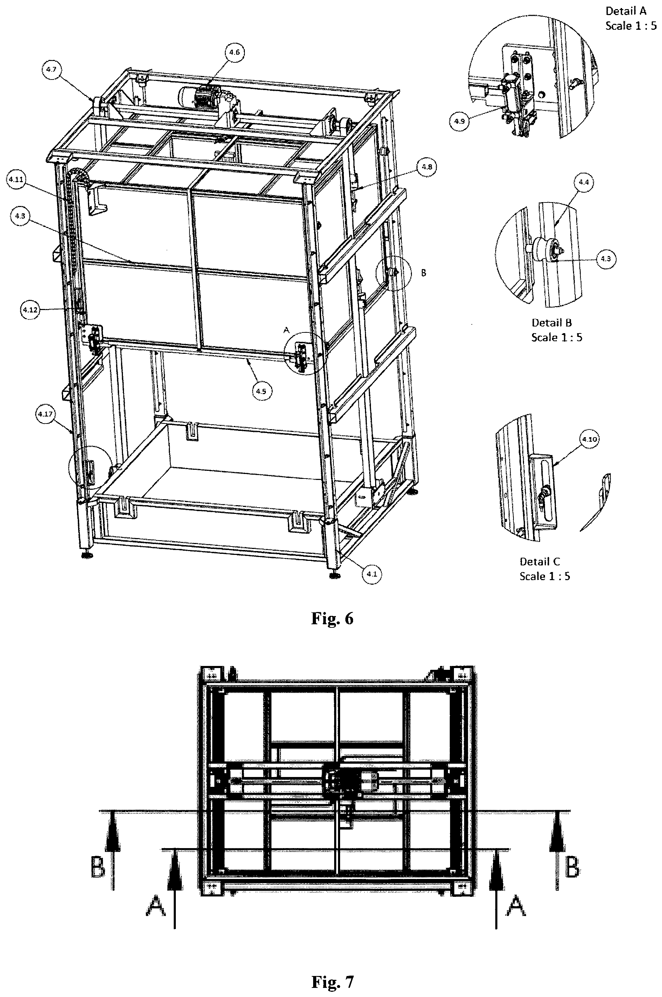

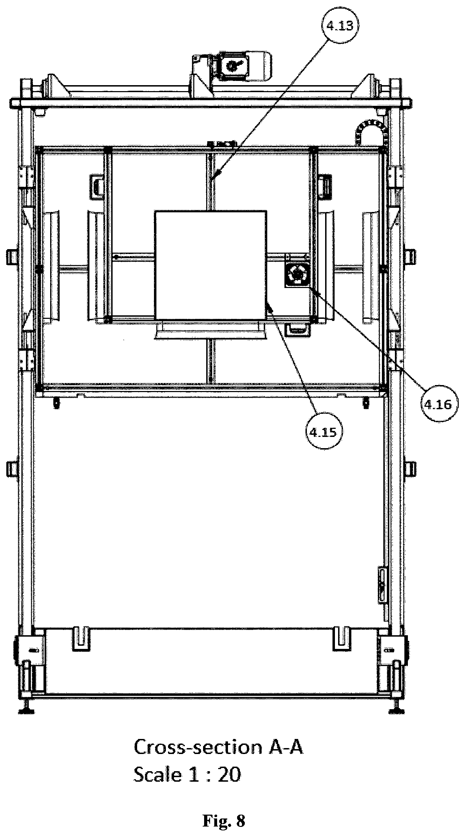

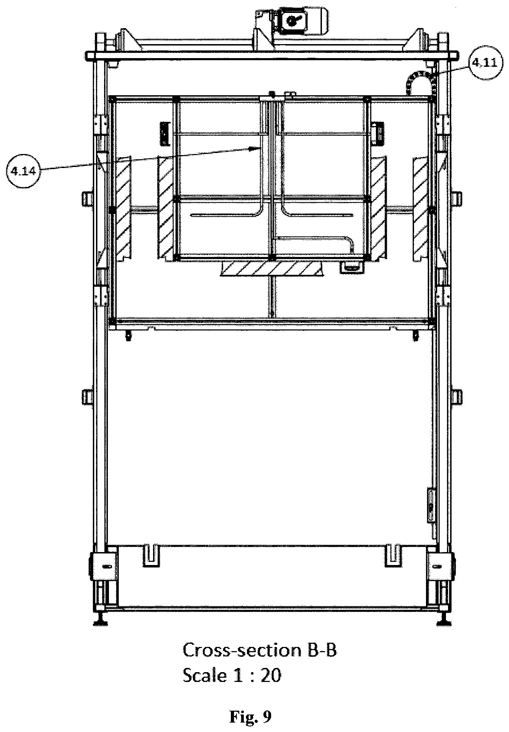

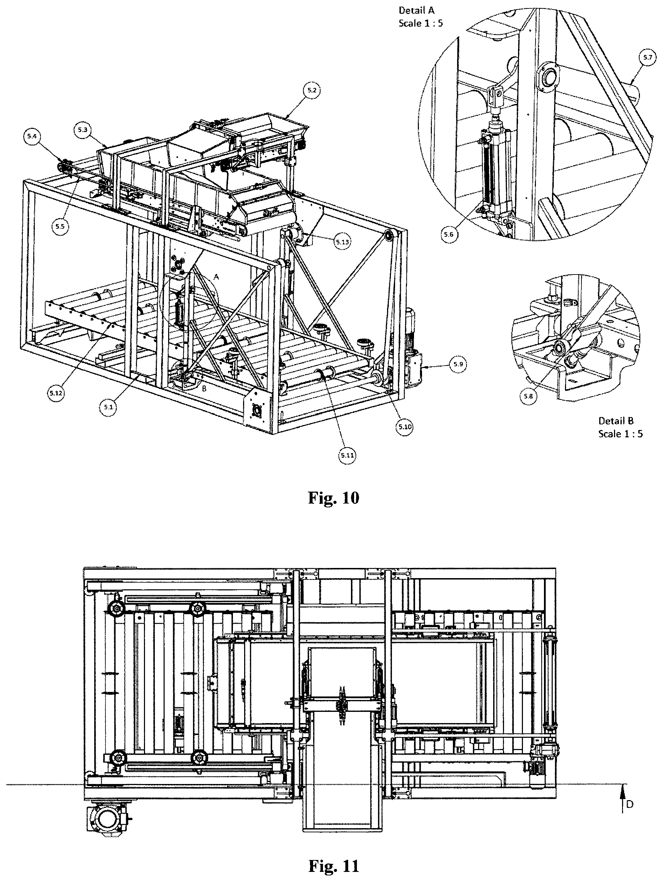

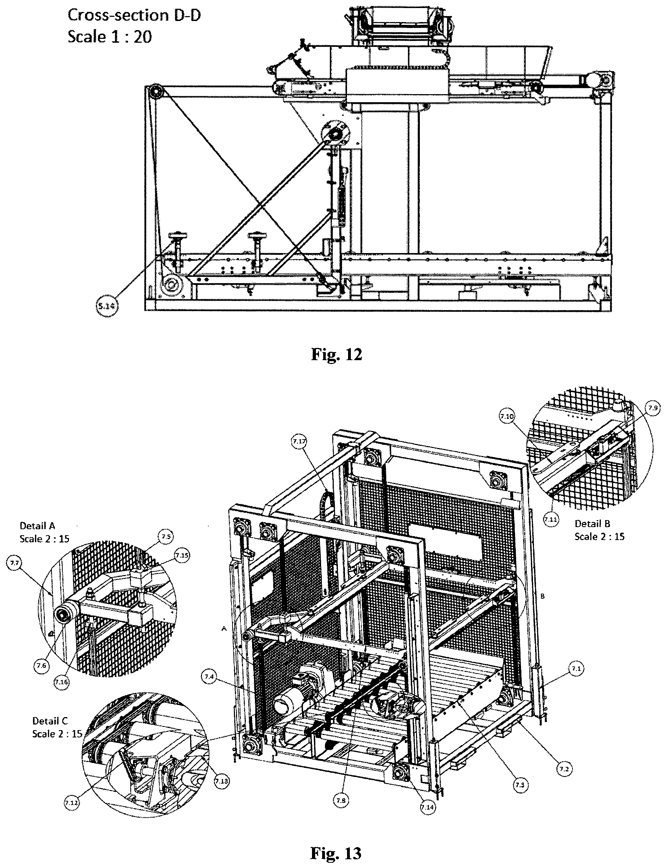

A solution according to the invention in an example, but not limiting implementation was presented on the figure.

Process line for the packaging of products, in an example implementation is used in the process of packaging of potatoes in pallet boxes.

A solution according to the invention has a modular design and consists of the following devices:
- destacking system 1,
- a system of longitudinal conveyors 2,
- a system of transverse conveyors 3,
- a container disinfection system 4,
- a system for the filling of containers with the product 5,
- a conveyor feeding the product to the system for the filling of containers with the product 6,
- stacking system 7.

A system of longitudinal conveyors 2 consists of two independently working systems, that is:
- a system of longitudinal conveyors 2a which feed containers from the destacking system 1 under a given container disinfection system 4,
   and installed in parallel
- a system of longitudinal conveyors 2b which feed the disinfected containers to the system for the filling of containers with the product 5
with the individual modules of the longitudinal conveyors 2a being connected with the system of longitudinal conveyors 2b by a system of transverse conveyors 3, which transport the pallet boxes being disinfected through the container disinfection system 4,

A solution according to the invention in the example implementation is characterised by that it contains 4 independently operating container disinfection systems 4, which are placed in series in relation to each other. Each of the container disinfection systems is used to fight viruses and bacteria which may be present in the pallet boxes, which are filled with potatoes.

In the example implementation every independent pallet box disinfection system 4 has the form of a cuboid dome, consisting of the dome bottom 4.1 and the dome cover 4.2. The dome bottom 4.1 consists of the bottom base and side walls permanently and tightly connected to it, whereas the dome cover 4.2 consists of an upper base and side walls permanently and tightly connected to it, whereas in two opposite side walls of the dome bottom 4.1 there are cut-outs, which enable installation of guide rails or other elements of the transport conveyor, advantageously guide rails of the transport conveyor, which feeds the disinfected pallet box into the dome. Between the dome bottom 4.1 and the dome cover 4.2 a dome seal 4.5 is attached. Additionally, to the side walls of the dome bottom 4.1 and to the side walls of the dome cover 4.2 elements of a mechanism 4.9 which provides pressure to the seal 4.5 are attached.

To one of the walls of the dome cover 4.2 using appropriate connectors known from prior art a conduit is attached which supplies ozone from an ozone generator to the inside of the dome, with the ozone generator constituting prior art and not being the subject of the invention, and thus it was not presented on the figure. Inside the dome a system for distributing of ozone 4.14 and a source of bactericidal and virucidal light 4.15 are installed, which in the example implementation is an UV-C lamp, whereas in the zone of conduits of the system for distributing ozone inside the chamber a fan 4.16 is installed.

The dome bottom 4.1 and the dome cover 4.2 are installed in the frame 4.17, with the dome cover 4.2 being installed in a sliding manner in relation to the dome bottom 4.1, where the dome bottom 4.1 is permanently attached to the frame 4.17. To the upper base of the dome cover 4.2 on its inner side a cuboid insert 4.13 is installed, which decreases the volume of the disinfection chamber within the dome walls, in which the disinfected pallet box is placed. UV-C lamps are attached to individual walls of the insert 4.13.

In the system according to the invention in the example implementation the dome, consisting of the dome bottom 4.1 and the dome cover 4.2, is attached to the disinfection system frame 4.17, in such a manner that the dome bottom 4.1 is permanently attached to the frame 4.17, whereas the dome cover 4.2 is attached in a sliding manner to the frame 4.17, with the system according to the invention having a drive 4.6 for raising the dome cover 4.2, which constitutes an electric motor connected to the dome cover 4.2 through a belt-based raising system 4.7 with a tensioning system 4.8. To the vertical elements of the frame 4.17 guide rods 4.4 are attached, and to external walls of the dome cover 4.2 guide rollers 4.3 are attached, which move on guide rods 4.4. To the vertical elements of the frame 4.17 moreover two position sensors are attached, where in the zone of the dome bottom 4.1 a dome cover 4.2 lower position sensor 4.10 is attached, and above this sensor a dome cover 4.2 upper position sensor 4.12 is attached.

Moreover, a medium feeding guide 4.11 is attached to the frame 4.17.

On one side of the container disinfection system 4 a system of longitudinal conveyors 2a, is located, advantageously roller conveyors 2.2, feeding containers from the destacking system 1 to the appropriate container disinfection system 4. It should be emphasised that the system of longitudinal conveyors 2 consists of a system of conveyors 2a which feed containers from the destacking system 1 to the given container disinfection system 4, and from a modular system of conveyors 2b which feed disinfected containers to the system for the filling of containers with the product 5. Every of the longitudinal conveyor modules 2a, 2b contain a roller conveyor 2.2 connected with the transporter raising frame 2.1, whereas the transporter raising system 2.1 constitutes a raising/lowering actuator 2.5, a raising shaft 2.8, a raising guide 2.4, a synchronisation pull rod 2.6 and a raising pull rod 2.7, and the mechanism for transporting of containers, in particular pallet boxes, over the conveyor rollers 2.2, constitutes a roller conveyor drive 2.10 connected with the rollers through a drive transmission chain 2.9, whereas advantageously every module of the longitudinal conveyors 2a, 2b has a sensor 2.3 for the detection of containers, in particular pallet boxes. On the other side of the container disinfection system 4 a parallel system of longitudinal conveyors 2b is located in the form of roller conveyors 2.2, which feed disinfected containers to the system for the filling of the container with the product 5, whereas both systems of longitudinal conveyors 2a, 2b in the form of roller conveyors, are connected with each other with at least one transverse conveyor system 3 in the form of a chain conveyor, which passes under at least one container disinfection system 4 and is installed in such a manner that it starts and ends respectively under the longitudinal conveyors 2a, 2b and each of the longitudinal conveyors 2a, 2b is attached to a raising frame 2.1 by a system of pull rods 2.6, 2.7 and/or actuators (2.5), which enable respectively raising and/or lowering of the longitudinal conveyors 2a, 2b in the form of roller conveyors 2.2 below the plane in which the guide rails 3.1 of the transverse conveyor system 3, advantageously chain conveyor guide rails 3.1, are located.

The system of transverse conveyors 3 - placed between the given module of the system of longitudinal conveyors 2a having the form of roller conveyors 2.2, which feed containers from the destacking system 1 under the container disinfection system 4, and the corresponding module of the longitudinal conveyors 2b, advantageously roller conveyors 2.2, which feed the disinfected containers to the system for filling the container with the product 5, the system of transverse conveyors 3 passing through a container, in particular pallet box, disinfection system 4 - consists of mutually parallel chain conveyor guide rails 3.1 connected to each other with middle legs 3.2, acting as a load-bearing frame and local supports, in which guide rails 3.1 a conveyor chain 3.9 is located, passing around guide pulleys 3.8 and a transport chain tensioner 3.10 system, and the drive system constitutes a combination of a conveyor drive 3.6, advantageously an electric motor, with a chain drive wheel 3.7 using a drive chain 3.5, where the chain drive wheel 3.7 is connected to the transport chain drive shaft 3.11 through a shaft coupling 3.4 and a rail connecting shaft 3.3.

The empty pallet boxes transported by a system of longitudinal conveyors 2a end up on the transverse conveyor 3 and are then transported to the disinfection system 4. After the disinfection process the pallet boxes using transverse conveyors 3 are then transported to the system of longitudinal conveyors 2b, using which they are transported to the filling system 5.

The system for filling the container with the product 5 has the form of a tilting platform 5.11 attached to a load-bearing frame 5.1, to which frame 5.1 in the lower zone a roller conveyor 5.12 is attached, and in the upper zone of the frame 5.1 a system of conveyors is attached, advantageously a side conveyor for the product 5.2 and a movable conveyor of the product 5.3, where the movable conveyor for the product 5.3 is connected to the drive through a drive shaft of the movable conveyor 5.4 and the drive belt of the movable conveyor 5.5, and the tilting platform 5.11, which possesses pallet box blocking clamps 5.7, connected to a blocking clamp actuator 5.6, is attached to the frame 5.1 in a rotating manner on an axis of its body 5.13, whereas the tilting platform 5.11 is connected to the tilting platform's drive 5.9, advantageously an electric drive, through a belt attached to a belt grip 5.8, passing around rollers to a belt reel 5.10.

Moreover, the filling of containers with the product 5 is characterized by a subsystem for controlling the amount of product in the container, advantageously containing an ultrasound analogue sensor, being located in the zone of conveyors 5.2, 5.3, with the subsystem being known from prior art and not constituting a subject of the invention, therefore it was not shown on the figure. To the tilting platform 5.11 in its lower part wheels for the positioning 5.14 of the pallet box, and a pallet box position sensor are attached. Whereas a conveyor feeding the product 6, advantageously a paddle belt conveyor, is attached to the system for filling the container with the product 5.

The start and the end of the process chain are formed by devices with the same design:
- destacking system 1,
- stacking system 7,

First, pallet boxes stacked one on another are delivered to the destacking system using a forklift. The destacking system 1 enables introduction of a single pallet box to the system of longitudinal containers 2a.

The destacking system 1 consists of a lift 1.8, to which grabbing clamps 1.10 are attached, advantageously connected with the actuator 1.9 using a grabbing clamp rotation chain 1.11, with the lift 1.8 being mounted in a load-bearing frame 1.1 of the destacking system, where in the lower zone of the load-bearing frame 1.1 a roller conveyor 1.3 is installed, with the lift raising/lowering mechanism constituting a lift drive 1.4 - an electric motor, lift chain 1.5 and a system of rollers containing at least one guide roller 1.6 moving on a guide rail 1.7 attached to the load-bearing frame 1.1 and a tensioning system, advantageously containing a lift chain upper tensioner 1.15 and a lift chain lower tensioner 1.16 and a lift chain rewinding axle 1.14, whereas the mechanism for the transporting of containers, in particular pallet boxes, in the horizontal plane constitutes a roller conveyor drive system 1.13 with a chain driving the rollers of the roller conveyor 1.12. Buffers for the forklift 1.2 and a lift powering element guide 1.17 are attached to the load-bearing frame 1.1 of the destacking system 1. The roller conveyor 1.3 of the destacking system 1 is connected with the roller conveyor 2.2 of the longitudinal conveyors 2a.

The stacking system 7 enables the stacking of disinfected pallet boxes filled with the product. It consists of a lift 7.8, to which grabbing clamps 7.10 are attached, advantageously connected with the actuator 7.9 using a grabbing clamp rotation chain 7.11, with the lift 7.8 being mounted in a load-bearing frame 7.1 of the destacking system, where in the lower zone of the load-bearing frame 7.1 a roller conveyor 7.3 is installed, with the lift raising/lowering mechanism constituting a lift drive 7.4, advantageously an electric motor, lift chain 7.5 and a system of rollers containing at least one guide roller 7.6 moving on a guide rail 7.7 attached to the load-bearing frame 7.1 and a tensioning system, advantageously containing a lift chain upper tensioner 7.15 and a lift chain lower tensioner 7.16 and a lift chain rewinding axle 7.14, whereas the mechanism for the transporting of containers, in particular pallet boxes, in the horizontal plane constitutes a roller conveyor drive system 7.13 with a chain driving the rollers of the roller conveyor 7.12. The roller conveyor 7.3 of the stacking system 7 is connected with the output roller conveyor 5.12 of the system for the filling of the container 5, in particular pallet box.

### List of designations

- 1.: Destacking system
1.1. Load-bearing frame of the destacking system
1.2. Buffers for the forklift
1.3. Roller conveyor
1.4. Lift drive
1.5. Lift chain
1.6. Guide roller
1.7. Guide rod
1.8. Lift
1.9. Grabbing clamp actuator
1.10. Grabbing clamp
1.11. Grabbing clamp rotation chain
1.12. Roller conveyor drive chain
1.13. Roller conveyor drive
1.14. Lift chain rewinding axle
1.15. Lift chain upper tensioner
1.16. Lift chain lower tensioner
1.17. Lift powering element guide
- 2.: Longitudinal conveyors system
2.1 . Transporter raising frame
2.2 . Roller conveyor
2.3 . Container detection system
2.4 . Raising guide
2.5 . Raising/lowering actuator
2.6 . Synchronisation pull rod
2.7 . Raising pull rod
2.8 . Raising shaft
2.9 . Drive transmission chain
2.10 Roller conveyor drive
- 3.: Transverse conveyors system
3.1 Chain conveyor guide rail
3.2 Middle leg
3.3 . Rail connecting shaft
3.4 . Shaft coupling
3.5 . Drive chain
3.6 . Conveyor drive
3.7 . Chain drive wheel
3.8 . Guide pulley
3.9 . Conveyor chain
3.10 Conveyor chain tensioner
3.11 Conveyor chain drive shaft
- 4.: Container disinfection system
4.1 Dome bottom
4.2 Dome cover
4.3 Dome cover guide rollers in the frame
4.4 Dome cover guides in the frame
4.5 Dome seal
4.6 Dome cover raising drive
4.7 Dome cover raising system
4.8 Raising mechanism tensioner system
4.9 Dome cover to dome bottom pressure mechanism
4.10 Dome cover lower position sensor
4.11 Medium feeding guide
4.12 Dome cover upper position sensor
4.13 Dome insert
4.14 Dome ozone distribution system
4.15 Source of bactericidal light and/or a source of virucidal light
4.16 Fan
4.17 Disinfecting system frame
- 5.: System for the filling of containers with the product
5.1. Load bearing frame of the system for the filling of containers with the product
5.2. Side conveyor for the product
5.3. Movable conveyor for the product
5.4. Drive shaft of the movable conveyor
5.5. Drive belt of the movable conveyor
5.6. Container blocking clamp actuator
5.7. Pallet box blocking clamp
5.8. Tilting platform belt grip
5.9. Tilting platform drive
5.10. Tilting platform reel
5.11. Tilting platform
5.12. Output roller conveyor
5.13. Axis of the tilting platform's body
5.14. Wheel for the positioning of the container, in particular pallet box
- 6.: Conveyor feeding the product to the system for the filling of containers with the product
- 7.: Stacking system
7.1 Load-bearing frame of the stacking system
7.2 Buffers for the forklift
7.3 Roller conveyor
7.4 Lift drive
7.5 Lift chain
7.6 Guide roller
7.7 Guide rod
7.8 Lift
7.9 Grabbing clamp actuator
7.10 Grabbing clamp
7.11 Grabbing clamp rotation chain
7.12 Roller conveyor drive chain
7.13 Roller conveyor drive
7.14 Lift chain rewinding axle
7.15 Lift chain upper tensioner
7.16 Lift chain lower tensioner
7.17 Lift powering element guide

## Claims

1. A process line for the packaging of products, in particular potatoes, into bulk containers, in particular pallet boxes, wherein a system of conveyors and devices for transporting and filling of containers with a product and a system for controlling of individual devices consists of the line containing at least one container disinfection system (4), advantageously four container disinfection systems (4), most advantageously when the container disinfection systems (4) are placed in series in relation to each other, where on one side of the container disinfection system (4) a system of longitudinal conveyors (2a) is located, advantageously roller conveyors (2.2), which feed in containers from a destacking system (1) under a specific container disinfection system (4), whereas on the other side of the container disinfection system (4) a parallel system of longitudinal conveyors (2b) is located, advantageously roller conveyors (2.2), which feed disinfected containers to the system for the filling of the container with the product (5), whereas both systems of longitudinal conveyors (2a, 2b), advantageously roller conveyors, are connected with each other with at least one transverse conveyor system (3), advantageously a chain conveyor, which passes under at least one container disinfection system (4) and is installed in such a manner that it starts and ends respectively under the longitudinal conveyors (2a, 2b), advantageously roller conveyors (2.2), is attached to a raising frame (2.1) by a system of pull rods(2.6, 2.7) and/or actuators (2.5), which enable respectively raising and/or lowering of the longitudinal conveyors (2a, 2b), advantageously roller conveyors (2.2), below the plane in which guide rails (3.1) of the transverse conveyor system (3), advantageously chain conveyor guide rails (3.1), are located.

2. A line in accordance with claim 1 **characterized in that** the destacking system (1) consists of a lift (1.8), to which grabbing clamps (1.10) are attached, advantageously connected with the actuator (1.9) using a grabbing clamp rotation chain (1.11), with the lift (1.8) being mounted in a load-bearing frame (1.1) of the destacking system, where in the lower zone of the load-bearing frame (1.1) a roller conveyor (1.3) is installed, with the lift raising/lowering mechanism constituting a lift drive (1.4), advantageously an electric motor, lift chain (1.5) and a system of rollers containing at least one guide roller (1.6) moving on a guide rail (1.7) attached to the load-bearing frame (1.1) and a tensioning system, advantageously containing a lift chain upper tensioner (1.15) and a lift chain lower tensioner (1.16) and a lift chain rewinding axle (1.14), whereas the mechanism for the transporting of containers, in particular pallet boxes, in the horizontal plane constitutes a roller conveyor drive system (1.13) with a chain driving the rollers of the roller conveyor (1.12).

3. A line in accordance with claim 1 or claim 2 **characterized in that** the roller conveyor (1.3) of the destacking system (1) is connected with the roller conveyor (2.2) of the longitudinal conveyor system (2a)

4. A line in accordance with claim 1 or claim 2 **characterized in that** buffers for the forklift (1.2) are attached to the load-bearing frame (1.1).

5. A line in accordance with claim 1 or claim 2 **characterized in that** lift powering element guide (1.17) is attached to the load-bearing frame (1.1).

6. A line in accordance with claim 1 **characterized in that** the system of longitudinal conveyors (2) consists of a modular system of conveyors (2a) which feed containers from the destacking system (1) to the given container disinfection system(4) and of a modular system of conveyors (2b) which feed disinfected containers to the system for filling the containers with the product (5), where each of the longitudinal conveyor modules (2a, 2b) contains a roller conveyor (2.2) connected with a transporter raising frame (2.1), whereas the transporter raising system (2.1) constitutes a raising/lowering actuator (2.5), a raising shaft (2.8), a raising guide (2.4), a synchronisation pull rod (2.6) and a raising pull rod (2.7), and the mechanism for transporting of containers, in particular pallet boxes, over the conveyor rollers (2.2) constitutes a roller conveyor drive (2.10) connected with the rollers through a drive transmission chain (2.9), whereas advantageously every module of the longitudinal conveyors (2a, 2b) has a sensor for the detection of containers, in particular pallet boxes (2.3).

7. A line in accordance with claim 1 or claim 6 **characterized in that** the system for the disinfection of containers (4), in particular pallet boxes, has the form of a closing dome placed between the system of the longitudinal conveyors (2a) which feed in containers from the destacking system (1) under a given container disinfection system (4) and the system of longitudinal conveyors (2b) which feed the disinfected containers to the system for the filling of container with the product (5), with the dome of the disinfecting system (4) being consisting of a dome bottom (4.1) and a dome cover (4.2), advantageously cuboidal one, where the dome cover (4.2) is installed in a sliding manner in relation to the dome bottom (4.1), whereas the dome cover (4.2) consists of an upper base and side walls permanently and tightly connected to it, whereas to the dome bottom (4.1) and/or to at least one of the walls of the dome cover (4.2) conduits are attached, which supply ozone from an ozone generator to the inside of the dome, and a system for distributing of ozone (4.14) and a source of bactericidal light and/or a source of virucidal light (4.15), advantageously an UV-C lamp, are installed inside the dome, whereas the ozone distribution system (4.14) consists of at least one conduit, in the zone of which is installed at least one fan (4.16), whereas advantageously the dome bottom (4.1) consists of a lower base of the dome bottom and side walls permanently and tightly connected to it, where in any of the side walls of the dome bottom (4.1) and/or the dome cover (4.2) there are cut-outs, which enable installation of guide rails or other elements of the transport conveyor, advantageously chain conveyor guide rails (3.1), which feeds the disinfected container, advantageously a pallet box, into the dome whereas between the dome bottom (4.1) and the dome cover (4.2) a dome seal (4.5) is installed, and elements of a seal (4.5) pressure mechanism (4.9) are attached to the dome bottom (4.1) and/or to the side walls of the dome cover (4.2).

8. A line in accordance with claim 1 or claim 7 **characterized in that** to the upper base of the dome cover (4.2) an insert (4.13) is attached, advantageously cuboid, which decreases the volume of the disinfection chamber within the dome walls, in which the disinfected container, in particular a pallet box, is placed, and moreover a source of bactericidal light and/or a source of virucidal light, advantageously an UV-C lamp is attached to any of the walls of the insert (4.13).

9. A line in accordance with claim 1 to claim 7 or claim 8 **characterized in that** the dome, consisting of a dome bottom (4.1) and a dome cover (4.2), is attached to the system frame (4.17) in such a manner that the dome bottom (4.1) is permanently connected to the frame (4.17), whereas the dome cover (4.2) is attached to the frame (4.17) in a sliding manner, whereas the system according to the invention has a dome cover (4.2) raising drive (4.6), advantageously an electric motor, which is connected to the dome cover (4.2) by a raising system (4.7), advantageously with a tensioning system (4.8), and the dome cover (4.2) raising system (4.7) constitutes a belt-based raising system, where guides (4.4), advantageously guide rods, are attached to the vertical elements of the frame (4.17), while to the external elements of the dome cover (4.2) guide rollers (4.3) are attached, and moreover to the vertical elements of the frame (4.17) at least one medium feeding guide (4.11) and at least one position sensor, advantageously two positions sensors, are attached, with most advantageously a dome cover (4.2) lower position sensor (4.10) being attached in the dome bottom (4.1) zone, and a dome cover (4.2) upper position sensor (4.10) being attached above it.

10. A line in accordance with claim 1 or claim 7 or claim 9 **characterized in that** the system of transverse conveyors (3) - placed between the given module of the system of longitudinal conveyors (2a), advantageously roller conveyors (2.2), which feed containers from the destacking system (1) under the container disinfection system (4), and the corresponding module of the longitudinal conveyors (2b), advantageously roller conveyors (2.2) which feed the disinfected containers to the system for filling the container with the product (5), the system of transverse conveyors (3) passing through a container, in particular pallet box, disinfection system (4 )- consists of mutually parallel chain conveyor guide rails (3.1) connected to each other with middle legs (3.2), acting as a load-bearing frame and local supports, in which guide rails (3.1) a conveyor chain (3.9) is located, passing around guide pulleys (3.8) and a transport chain tensioner (3.10) system, and the drive system constitutes a combination of a conveyor drive (3.6), advantageously an electric motor, with a chain drive wheel (3.7) using a drive chain (3.5), where the chain drive wheel (3.7) is connected to the transport chain drive shaft (3.11) through a shaft coupling (3.4) and a rail connecting shaft (3.3).

11. A line in accordance with claim 1 **characterized in that** the system for filling the container with the product (5) constitutes a tilting platform (5.11) attached to a load-bearing frame (5.1), to which frame (5.1) in the lower zone a roller conveyor (5.12) is attached, and in the upper zone of the frame (5.1) a system of conveyors is attached, advantageously a side conveyor for the product (5.2) and a movable conveyor of the product (5.3), where the movable conveyor for the product (5.3) is connected to the drive through a drive shaft of the movable conveyor (5.4) and the drive belt of the movable conveyor (5.5), and the tilting platform (5.11), which possesses pallet box blocking clamps (5.7), connected to a blocking clamp actuator (5.6), is attached to the frame (5.1) in a rotating manner on an axis of its body (5.13), whereas the tilting platform (5.11) is connected to the tilting platform's drive (5.9), advantageously an electric drive, through a belt attached to a belt grip (5.8), passing around rollers to a belt reel (5.10).

12. A line in accordance with claim 1 or claim 11 **characterized in that** at the system for filling the container with the product (5) in the zone of product conveyors (5.2, 5.3) a subsystem for controlling the amount of product in the container being located, advantageously containing an ultrasound analogue sensor, and in the tilting platform zone (5.11), advantageously to its lower part, wheels for the positioning (5.14) of the container, in particular pallet box, and a container, in particular pallet box, position sensor are attached.

13. A line in accordance with claim 1 or claim 12 **characterized in that** a conveyor feeding the product (6), advantageously a paddle belt conveyor, is attached to the system for filling the container with the product (5).

14. A line in accordance with claim 1 **characterized in that** the stacking system (7) consists of a lift (7.8), to which grabbing clamps (7.10) are attached, advantageously connected with the actuator (7.9) using a grabbing clamp rotation chain (7.11), with the lift (7.8) being mounted in a load-bearing frame (7.1) of the destacking system, where in the lower zone of the load-bearing frame (7.1) a roller conveyor (7.3) is installed, with the lift raising/lowering mechanism constituting a lift drive (7.4), advantageously an electric motor, lift chain (7.5) and a system of rollers containing at least one guide roller (7.6) moving on a guide rail (7.7) attached to the load-bearing frame (7.1) and a tensioning system, advantageously containing a lift chain upper tensioner (7.15) and a lift chain lower tensioner (7.16) and a lift chain rewinding axle (7.14), whereas the mechanism for the transporting of containers, in particular pallet boxes, in the horizontal plane constitutes a roller conveyor drive system (7.13) with a chain driving the rollers of the roller conveyor (7.12).

15. A line in accordance with claim 1 or claim 14 **characterized in that** the roller conveyor (7.3) of the stacking system (7) is connected with the output roller conveyor (5.12) of the system for the filling of the container (5), in particular pallet box.

## Patentansprüche

1. Prozesslinie zum Verpacken von Produkten, insbesondere Kartoffeln, in Sammelbehälter, insbesondere Palettenkisten, bestehend aus einem Förderersystem und Vorrichtungen zum Transport und zur Befüllung der Behälter mit dem Produkt sowie einem Steuerungssystem der einzelnen Vorrichtungen, **dadurch gekennzeichnet, dass** die Linie mindestens ein Behälterdesinfektionssystem (4) umfasst, bevorzugt vier Behälterdesinfektionssysteme (4), besonders bevorzugt, wenn die Behälterdesinfektionssysteme (4) in Reihe zueinander angeordnet sind, wobei sich auf der einen Seite des Behälterdesinfektionssystems (4) ein Längsförderersystem (2a), bevorzugt Rollenförderer (2.2), befindet, das die Behälter aus dem Entstapelsystem (1) dem jeweiligen Behälterdesinfektionssystem (4) zuführt, wohingegen sich auf der anderen Seite des Behälterdesinfektionssystems (4) ein paralleles Längsförderersystem (2b), bevorzugt Rollenförderer (2.2), befindet, das die desinfizierten Behälter dem Behälterbefüllungssystem mit dem Produkt (5) zuführt, wobei beide Längsförderersysteme (2a, 2b), bevorzugt Rollenförderer, durch mindestens ein Querförderersystem (3), bevorzugt Kettenförderer, miteinander verbunden sind, das unter mindestens einem Behälterdesinfektionssystem (4) verläuft und derart befestigt ist, dass es jeweils unterhalb der Längsförderer (2a, 2b), bevorzugt der Rollenförderer (2.2), beginnt und endet, wobei jede der Längsförderersysteme (2a, 2b), bevorzugt der Rollenförderer (2.2), über ein System aus Zugstangen (2.6, 2.7) und/oder Aktuatoren (2.5) am Heberahmen (2.1) befestigt ist, die das Anheben und/oder Absenken der Längsförderer (2a, 2b), bevorzugt Rollenförderer (2.2), unterhalb der Ebene ermöglichen, wobei in dieser Ebene die Führungsschienen (3.1) des Querförderersystems (3), bevorzugt die Führungsschienen des Kettenförderers (3.1), liegen.

2. Linie nach Anspruch 1, **dadurch gekennzeichnet, dass** das Entstapelsystem (1) aus einem Hubwerk (1.8) besteht, an dem Greifarme (1.10) befestigt sind, die bevorzugt über eine Greifarm-Drehkette (1.11) mit dem Aktuator (1.9) verbunden sind, wobei dieses Hubwerk (1.8) im Tragrahmen des Entstapelsystems (1.1) befestigt ist, wobei im unteren Bereich des Tragrahmens (1.1) ein Rollenförderer (1.3) befestigt ist, wobei der Hebe-/Senkmechanismus des Hubwerks einen Hubwerksantrieb (1.4), bevorzugt einen Elektromotor, eine Hubwerkskette (1.5) sowie ein Rollensystem darstellt, das mindestens eine Führungsrolle (1.6), die sich auf einer am Tragrahmen (1.1) befestigten Führungsschiene (1.7) bewegt, sowie ein Spannsystem, das bevorzugt einen oberen Hubwerkskettenspanner (1.15) und einen unteren Hubwerkskettenspanner (1.16) umfasst, sowie eine Hubwerksketten-Umlenkachse (1.14) umfasst, wobei der Mechanismus zum Bewegen der Behälter, insbesondere Palettenkisten, in der horizontalen Ebene ein Rollenförderer-Antriebssystem (1.13) mit einer die Rollen des Rollenförderers (1.12) antreibenden Kette darstellt.

3. Linie nach Anspruch 1 oder Anspruch 2, **dadurch gekennzeichnet, dass** der Rollenförderer (1.3) des Entstapelsystems (1) mit dem Rollenförderer (2.2) des Längsförderersystems (2a) verbunden ist.

4. Linie nach Anspruch 1 oder Anspruch 2, **dadurch gekennzeichnet, dass** am Tragrahmen (1.1) Stoßfänger für einen Gabelstapler (1.2) befestigt sind.

5. Linie nach Anspruch 1 oder Anspruch 2, **dadurch gekennzeichnet, dass** am Tragrahmen (1.1) eine Zuleitung für die Hubwerksversorgungselemente (1.17) befestigt ist.

6. Linie nach Anspruch 1, **dadurch gekennzeichnet, dass** das Längsförderersystem (2) aus einem modularen Förderersystem (2a), das Behälter aus dem Entstapelsystem (1) einem bestimmten Behälterdesinfektionssystem (4) zuführt, sowie aus einem modularen Förderersystem (2b) besteht, das die desinfizierten Behälter dem Behälterbefüllungssystem mit dem Produkt (5) zuführt, wobei jedes der Längsförderersysteme (2a, 2b) einen Rollenförderer (2.2) umfasst, der mit dem Heberahmen des Förderers (2.1) verbunden ist, wobei das Hebesystem des Förderers (2.1) einen Hebe-/Senkaktuator (2.5), eine Hebewelle (2.8), eine Hebeführung (2.4), einen Synchronisationszug (2.6) und einen Hebezug (2.7) darstellt, wobei der Mechanismus zum Bewegen der Behälter, insbesondere der Palettenkisten, auf den Förderrollen (2.2) mit dem Antrieb des Rollenförderers (2.10) über eine Antriebsübertragungskette (2.9) mit den Rollen verbunden ist, wobei bevorzugt jedes der Längsförderermodule (2a, 2b) einen Behältererkennungssensor (2.3), insbesondere für Palettenkisten, aufweist.

7. Linie nach Anspruch 1 oder Anspruch 6, **dadurch gekennzeichnet, dass** das Behälterdesinfektionssystem (4), insbesondere für Palettenkisten, die Form einer verschließbaren Kuppel aufweist, die sich zwischen dem Längsförderersystem (2a), das Behälter aus dem Entstapelsystem (1) dem jeweiligen Behälterdesinfektionssystem (4) zuführt, und dem Längsförderersystem (2b), das die desinfizierten Behälter dem Behälterbefüllungssystem mit dem Produkt (5) zuführt, befindet, wobei diese Kuppel des Desinfektionssystems (4) aus einem Kuppelboden (4.1) und einem Kuppeldeckel (4.2), bevorzugt quaderförmig, besteht, wobei der Kuppeldeckel (4.2) verschiebbar gegenüber dem Kuppelboden (4.1) befestigt ist, wobei der Kuppeldeckel (4.2) aus einer oberen Basis sowie aus fest und dicht mit dieser verbundenen Seitenwänden besteht, wohingegen am Kuppelboden (4.1) und/oder an mindestens einer der Wände des Kuppeldeckels (4.2) Leitungen befestigt sind, die Ozon aus einem Ozongenerator in das Innere der Kuppel leiten, wobei im Inneren der Kuppel ein Ozonverteilungssystem (4.14) sowie eine bakterizide Lichtquelle und/oder eine viruzide Lichtquelle (4.15), bevorzugt eine UV-C-Lampe, befestigt ist, wobei das Ozonverteilungssystem (4.14) aus mindestens einer Leitung besteht, in deren Bereich mindestens ein Ventilator (4.16) befestigt ist, wobei bevorzugt der Kuppelboden (4.1) aus einer unteren Basis des Kuppelbodens sowie aus fest und dicht mit dieser verbundenen Seitenwänden besteht, wobei sich in einer beliebigen der Seitenwände des Kuppelbodens (4.1) und/oder des Kuppeldeckels (4.2) Ausschnitte befinden, die die Befestigung von Führungsschienen oder anderen Elementen des Transportförderers, bevorzugt von Führungsschienen des Kettenförderers (3.1), ermöglichen, der einen zu desinfizierenden Behälter, insbesondere eine Palettenkiste, in das Innere der Kuppel befördert, wobei zwischen dem Kuppelboden (4.1) und dem Kuppeldeckel (4.2) eine Kuppeldichtung (4.5) befestigt ist und am Kuppelboden (4.1) und/oder an den Seitenwänden des Kuppeldeckels (4.2) Elemente eines Anpressmechanismus (4.9) für die Dichtung (4.5) befestigt sind.

8. Linie nach Anspruch 1 oder Anspruch 7, **dadurch gekennzeichnet, dass** an der Unterseite des oberen Kuppeldeckels (4.2) ein Einsatz (4.13), bevorzugt quaderförmig, befestigt ist, der das Volumen der durch die Kuppelwände begrenzten Desinfektionskammer verringert, in der der zu desinfizierende Behälter, insbesondere eine Palettenkiste, platziert wird, und ferner eine bakterizide Lichtquelle und/oder eine viruzide Lichtquelle, bevorzugt eine UV-C-Lampe, an einer beliebigen Wand des Einsatzes (4.13) befestigt ist.

9. Linie nach Anspruch 1 bis Anspruch 7 oder Anspruch 8, **dadurch gekennzeichnet, dass** die Kuppel, bestehend aus dem Kuppelboden (4.1) und dem Kuppeldeckel (4.2), an den Systemrahmen (4.17) derart befestigt ist, dass der Kuppelboden (4.1) mit dem Rahmen (4.17) fest verbunden ist, wohingegen der Kuppeldeckel (4.2) verschiebbar am Rahmen (4.17) befestigt ist, wobei das erfindungsgemäße System einen Antrieb (4.6) zum Anheben des Kuppeldeckels (4.2), bevorzugt einen Elektromotor, aufweist, der über ein Hebesystem (4.7), bevorzugt mit einem Spannsystem (4.8), verbunden ist, wobei das Hebesystem (4.7) des Kuppeldeckels (4.2) ein Riemenhebesystem darstellt, wobei an den vertikalen Rahmenelementen (4.17) Führungen (4.4), bevorzugt Stangenführungen, befestigt sind, wohingegen an den Außenwänden des Kuppeldeckels (4.2) Führungsrollen (4.3) befestigt sind, und ferner an den vertikalen Rahmenelementen (4.17) mindestens eine Zuleitung (4.11) zum Zuführen eines Mediums und mindestens ein Positionssensor, bevorzugt zwei Positionssensoren, befestigt sind, wobei bevorzugt im Bereich des Kuppelbodens (4.1) ein unterer Positionssensor (4.10) des Kuppeldeckels (4.2) befestigt ist und oberhalb dieses Sensors ein oberer Positionssensor (4.10) des Kuppeldeckels (4.2) befestigt ist.

10. Linie nach Anspruch 1 oder Anspruch 7 oder Anspruch 9, **dadurch gekennzeichnet, dass** das Querförderersystem (3) - das sich zwischen einem bestimmten Modul des Längsförderersystems (2a), bevorzugt Rollenförderer (2.2), die Behälter aus dem Entstapelsystem (1) dem Behälterdesinfektionssystem (4) zuführen, und dem entsprechenden Modul des Längsförderersystems (2b), bevorzugt Rollenförderer (2.2), befindet, die die desinfizierten Behälter dem Behälterbefüllungssystem (5) zuführen, wobei dieses Querförderersystem (3) durch das Behälterdesinfektionssystem (4), insbesondere für Palettenkisten, verläuft - aus zueinander parallelen Führungsschienen des Kettenförderers (3.1) besteht, die durch mittlere Füße (3.2) miteinander verbunden sind, die die Funktion eines Tragrahmens und lokaler Stützen erfüllen, wobei sich in diesen Führungsschienen (3.1) eine Transportkette (3.9) befindet, die um das Umlenkradsystem (3.8) und das Spannsystem der Transportkette (3.10) verläuft, wobei das Antriebssystem die Verbindung des Fördererantriebs (3.6), bevorzugt eines Elektromotors, mit dem Kettenantriebsrad (3.7) mittels einer Antriebskette (3.5) darstellt, wobei das Kettenantriebsrad (3.7) über eine Wellenkupplung (3.4) und eine Schienenverbindungswelle (3.3) mit der Antriebswelle der Transportkette (3.11) verbunden ist.

11. Linie nach Anspruch 1, **dadurch gekennzeichnet, dass** das Behälterbefüllungssystem mit dem Produkt (5) eine schwenkbare Plattform (5.11) darstellt, die im Tragrahmen (5.1) befestigt ist, wobei an diesem Rahmen (5.1) im unteren Bereich ein Rollenförderer (5.12) befestigt ist, wobei im oberen Bereich des Rahmens (5.1) ein Förderersystem, bevorzugt ein Seitenförderer für das Produkt (5.2) sowie ein Schiebeförderer für das Produkt (5.3), befestigt ist, wobei der Schiebeförderer für das Produkt (5.3) über eine Antriebswelle des Schiebeförderers (5.4) mit dem Antrieb und dem Antriebsriemen des Schiebeförderers (5.5) verbunden ist, wobei die schwenkbare Plattform (5.11), die über Verriegelungsklauen (5.7) für die Palettenkiste verfügt, die mit dem Aktuator der Verriegelungsklauen (5.6) verbunden sind, drehbar im Achskörper (5.13) am Rahmen (5.1) befestigt ist, wobei die schwenkbare Plattform (5.11) über einen in der Riemenhalterung (5.8) befestigten Riemen, der um die Rollen zum Riemenaufwickler (5.10) läuft, mit dem Antrieb der schwenkbaren Plattform (5.9), bevorzugt einem Elektromotor, verbunden ist.

12. Linie nach Anspruch 1 oder Anspruch 11, **dadurch gekennzeichnet, dass** das Behälterbefüllungssystem mit dem Produkt (5) im Bereich der Förderer (5.2, 5.3) für das Produkt unterhalb einer Baugruppe zur Kontrolle der Produktmenge im Behälter angeordnet ist, die bevorzugt einen analogen Ultraschallsensor umfasst, wobei im Bereich der schwenkbaren Plattform (5.11), bevorzugt an deren unterem Teil, Positionierungsräder (5.14) für den Behälter, insbesondere die Palettenkiste, sowie ein Behälterpositionssensor, insbesondere für die Palettenkiste, befestigt sind.

13. Linie nach Anspruch 1 oder Anspruch 12, **dadurch gekennzeichnet, dass** am Behälterbefüllungssystem mit dem Produkt (5) ein Produktzuführförderer (6), bevorzugt ein Bandförderer mit Mitnehmern, angeschlossen ist.

14. Linie nach Anspruch 1, **dadurch gekennzeichnet, dass** das Stapelsystem (7) aus einem Hubwerk (7.8) besteht, an dem Greifarme (7.10) befestigt sind, die bevorzugt über eine Greifarm-Drehkette (7.11) mit dem Aktuator (7.9) verbunden sind, wobei dieses Hubwerk (7.8) im Tragrahmen des Entstapelsystems (7.1) befestigt ist, wobei im unteren Bereich des Tragrahmens (7.1) ein Rollenförderer (7.3) befestigt ist, wobei der Hebe-/Senkmechanismus des Hubwerks einen Hubwerksantrieb (7.4), bevorzugt einen Elektromotor, eine Hubwerkskette (7.5) sowie ein Rollensystem darstellt, das mindestens eine Führungsrolle (7.6), die sich auf einer am Tragrahmen (7.1) befestigten Führungsschiene (7.7) bewegt, sowie ein Spannsystem, das bevorzugt einen oberen Hubwerkskettenspanner (7.15) und einen unteren Hubwerkskettenspanner (7.16) umfasst, sowie eine Hubwerksketten-Umlenkachse (7.14) umfasst, wobei der Mechanismus zum Bewegen der Behälter, insbesondere Palettenkisten, in der horizontalen Ebene ein Rollenförderer-Antriebssystem (7.13) mit einer die Rollen des Rollenförderers (7.12) antreibenden Kette darstellt.

15. Linie nach Anspruch 1 oder Anspruch 14, **dadurch gekennzeichnet, dass** der Rollenförderer (7.3) des Stapelsystems (7) mit dem Auslaufrollenförderer (5.12) des Behälterbefüllungssystems mit dem Produkt (5), insbesondere für Palettenkisten, verbunden ist.

## Revendications

1. Ligne destinée à l'emballage de produits, notamment de pommes de terre, dans des conteneurs collectifs, en particulier des caisses-palettes (palox), composée d'un système de convoyeurs et de dispositifs destinés au transport et au remplissage des conteneurs avec le produit, ainsi que d'un système de commande des différents dispositifs, **caractérisée en ce que** la ligne comprend au moins un système de désinfection des conteneurs (4), de préférence quatre systèmes de désinfection des conteneurs (4), de préférence avec les systèmes de désinfection des conteneurs (4) disposés en série les uns par rapport aux autres, où, d'un côté du système de désinfection des conteneurs (4), se trouve un système de convoyeurs longitudinaux (2a), de préférence des convoyeurs à rouleaux (2.2), acheminant les conteneurs depuis le système de désempilage (1) vers le système de désinfection des conteneurs (4) concerné, tandis que de l'autre côté du système de désinfection des conteneurs (4) se trouve un système parallèle de convoyeurs longitudinaux (2b), de préférence des convoyeurs à rouleaux (2.2), acheminant les conteneurs désinfectés vers le système de remplissage des conteneurs avec le produit (5), les deux systèmes de convoyeurs longitudinaux (2a, 2b), de préférence des convoyeurs à rouleaux, étant reliés entre eux par au moins un système de convoyeur transversal (3), de préférence un convoyeur à chaîne, qui passe sous au moins un système de désinfection des conteneurs (4) et il est fixé de telle sorte qu'il commence et se termine respectivement en dessous des convoyeurs longitudinaux (2a, 2b), de préférence des convoyeurs à rouleaux (2.2), tandis que chacun des systèmes de convoyeur longitudinal (2a, 2b), de préférence des convoyeurs à rouleaux (2.2), est fixé au châssis de levage (2.1) par l'intermédiaire d'un système de tirants ou de barres (2.6, 2.7) et/ou de vérins (2.5), permettant respectivement de lever et/ou d'abaisser les convoyeurs longitudinaux (2a, 2b), de préférence des convoyeurs à rouleaux (2.2), en dessous du plan dans lequel se trouvent les rails de guidage (3.1) du système de convoyeur transversal (3), de préférence des rails de guidage de convoyeur à chaîne (3.1).

2. Ligne selon la revendication 1, **caractérisée en ce que** le système de désempilage (1) se compose d'un élévateur (1.8) auquel sont fixées des pinces de préhension (1.10), de préférence connectées à un vérin (1.9) au moyen d'une chaîne de rotation des pinces de préhension (1.11), ledit élévateur (1.8) est fixé dans le châssis porteur du système de désempilage (1.1), où dans la zone inférieure du châssis porteur (1.1) est monté un convoyeur à rouleaux (1.3), le mécanisme de levage/abaissement de l'élévateur étant constitué par l'entraînement de l'élévateur (1.4), de préférence un moteur électrique, la chaîne de l'élévateur (1.5) et un système de rouleaux comprenant au moins un rouleau de guidage (1.6) se déplaçant le long d'un rail de guidage (1.7) fixé au châssis porteur (1.1) et un système de tension, comprenant de préférence un tendeur supérieur de la chaîne d'élévateur (1.15) et un tendeur inférieur de la chaîne d'élévateur (1.16), ainsi qu'un axe de renvoi de la chaîne d'élévateur (1.14), et le mécanisme de déplacement des conteneurs, notamment des caisses-palettes (palox), dans le plan horizontal est constitué par le système d'entraînement du convoyeur à rouleaux (1.13) avec une chaîne d'entraînement des rouleaux du convoyeur à rouleaux (1.12).

3. Ligne selon la revendication 1 ou la revendication 2, **caractérisée en ce que** le convoyeur à rouleaux (1.3) du système de désempilage (1) est relié au convoyeur à rouleaux (2.2) du système de convoyeurs longitudinaux (2a).

4. Ligne selon la revendication 1 ou la revendication 2, **caractérisée en ce que** des butoirs pour chariot élévateur (1.2) sont fixés au châssis porteur (1.1).

5. Ligne selon la revendication 1 ou la revendication 2, **caractérisée en ce que** le guide des éléments d'alimentation de l'élévateur (1.17) est fixé au châssis porteur (1.1).

6. Ligne selon la revendication 1, **caractérisée en ce que** le système de convoyeurs longitudinaux (2) est constitué d'un système modulaire de convoyeurs (2a) amenant les conteneurs depuis le système de désempilage (1) vers un système donné de désinfection des conteneurs (4) et d'un système modulaire de convoyeurs (2b) amenant les conteneurs désinfectés vers le système de remplissage des conteneurs par le produit (5), chaque module de convoyeurs longitudinaux (2a, 2b) comprenant un convoyeur à rouleaux (2.2) relié au cadre de levage du convoyeur (2.1), le système de levage du convoyeur (2.1) étant constitué d'un vérin de levage/abaissement (2.5), d'un arbre de levage (2.8), d'un rail de guidage de levage (2.4), d'un tirant de synchronisation (2.6) et d'un tirant de levage (2.7), tandis que le mécanisme de déplacement des conteneurs, en particulier des caisses-palettes (palox), sur les rouleaux du convoyeur (2.2) est assuré par l'entraînement du convoyeur à rouleaux (2.10) relié aux rouleaux au moyen d'une chaîne de transmission (2.9), chaque module de convoyeurs longitudinaux (2a, 2b) comprenant de préférence un capteur de détection des conteneurs (2.3), en particulier des caisses-palettes (palox).

7. Ligne selon la revendication 1 ou la revendication 6, **caractérisée en ce que** le système de désinfection des conteneurs (4), en particulier des caisses-palettes (palox), se présente sous la forme d'un dôme fermable situé entre le système de convoyeurs longitudinaux (2a) amenant les conteneurs depuis le système de désempilage (1) vers ledit système de désinfection des conteneurs (4) et le système de convoyeurs longitudinaux (2b) amenant les conteneurs désinfectés vers le système de remplissage des conteneurs par le produit (5), ledit dôme de désinfection (4) étant constitué d'un fond de dôme (4.1) et d'un couvercle de dôme (4.2), de préférence parallélépipédique, le couvercle de dôme (4.2) étant monté coulissant par rapport au fond de dôme (4.1). Le couvercle de dôme (4.2) se compose d'une base supérieure et de parois latérales fixées de manière solide et étanche à celle-ci, tandis que des conduites amenant de l'ozone depuis un générateur d'ozone à l'intérieur du dôme sont fixées au fond de dôme (4.1) et/ou à au moins l'une des parois du couvercle de dôme (4.2). À l'intérieur du dôme sont fixés un système de distribution d'ozone (4.14) ainsi qu'une source de lumière bactéricide et/ou une source de lumière virucide (4.15), de préférence une lampe UV-C, le système de distribution d'ozone (4.14) étant constitué d'au moins une conduite dans la zone de laquelle est monté au moins un ventilateur (4.16), de préférence, le fond de dôme (4.1) se compose d'une base inférieure du fond de dôme et de parois latérales solidement et étanchement fixées à celle-ci, certaines des parois latérales du fond de dôme (4.1) et/ou du couvercle de dôme (4.2) comportant des découpes permettant de fixer des rails de guidage ou d'autres éléments d'un convoyeur de transport, de préférence des rails de guidage d'un convoyeur à chaîne (3.1) introduisant à l'intérieur du dôme le conteneur à désinfecter, en particulier une palette-caisse (palox), tandis qu'entre le fond de dôme (4.1) et le couvercle de dôme (4.2) est fixée un joint d'étanchéité du dôme (4.5), et au fond de dôme (4.1) et/ou aux parois latérales du couvercle de dôme (4.2) sont fixés des éléments du mécanisme de serrage (4.9) du joint (4.5).

8. Ligne selon la revendication 1 ou la revendication 7, **caractérisée en ce qu'**une entretoise (4.13), de préférence parallélépipédique, est fixée à la base supérieure du couvercle du dôme (4.2), réduisant le volume de la chambre de désinfection délimitée par les parois du dôme, dans laquelle est placé le conteneur à désinfecter, en particulier une palette-caisse (palox), et en outre une source de lumière bactéricide et/ou une source de lumière virucide, de préférence une lampe UV-C, est fixée à l'une quelconque des parois de l'entretoise (4.13).

9. Ligne selon la revendication 1 jusqu'à la revendication 7 ou la revendication 8, **caractérisée en ce que** le dôme, composé du fond de dôme (4.1) et du couvercle de dôme (4.2), est fixé au bâti du système (4.17) de telle sorte que le fond de dôme (4.1) est solidairement relié au bâti (4.17), tandis que le couvercle de dôme (4.2) est monté coulissant par rapport au bâti (4.17). Le système selon l'invention comporte un entraînement (4.6) de levage du couvercle de dôme (4.2), de préférence un moteur électrique, relié au couvercle de dôme (4.2) par un système de levage (4.7), de préférence avec un système de tension (4.8), le système de levage (4.7) du couvercle de dôme (4.2) étant un système de levage par courroie, tandis que des guidages (4.4), de préférence des guidages à tiges, sont fixés aux éléments verticaux du bâti (4.17), et des roulettes de guidage (4.3) sont fixées aux parois extérieures du couvercle du dôme (4.2), et en outre, au moins un conduit (4.11) acheminant un fluide ainsi qu'au moins un capteur de position, de préférence deux capteurs de position, sont fixés aux éléments verticaux du bâti (4.17), le plus avantageusement un capteur de position bas (4.10) du couvercle du dôme (4.2) étant monté dans la zone du fond du dôme (4.1), et au-dessus de celui-ci un capteur de position haut (4.10) du couvercle du dôme (4.2).

10. Ligne selon la revendication 1 ou la revendication 7 ou la revendication 9, **caractérisée en ce que** le système de convoyeurs transversaux (3) - situé entre un module donné du système de convoyeurs longitudinaux (2a), de préférence des convoyeurs à rouleaux (2.2) amenant les conteneurs depuis le système de désempilage (1) vers le système de désinfection des conteneurs (4), et le module correspondant du système de convoyeurs longitudinaux (2b), de préférence des convoyeurs à rouleaux (2.2) amenant les conteneurs désinfectés vers le système de remplissage du conteneur par le produit (5) - lequel système de convoyeurs transversaux (3) traverse le système de désinfection des conteneurs (4), en particulier des palettes-caisses (palox) - est constitué de rails de guidage parallèles du convoyeur à chaîne (3.1) reliés entre eux par des pieds centraux (3.2) faisant office de châssis porteur et d'appuis locaux, ou dans ces rails de guidage (3.1) se trouve une chaîne de transport (3.9) circulant autour d'un système de roues de renvoi (3.8) et d'un système de tendeur de la chaîne de transport (3.10), tandis que le système d'entraînement consiste en la liaison de l'entraînement du convoyeur (3.6), de préférence un moteur électrique, à la roue dentée d'entraînement (3.7) au moyen d'une chaîne d'entraînement (3.5) ou la roue dentée d'entraînement (3.7) est reliée à l'arbre d'entraînement de la chaîne de transport (3.11) via un accouplement d'arbres (3.4) et un arbre reliant les rails (3.3).

11. Ligne selon la revendication 1, **caractérisée en ce que** le système de remplissage du conteneur par le produit (5) est constitué d'une plateforme basculante (5.11) montée dans un châssis porteur (5.1), au bas duquel est fixé un convoyeur à rouleaux (5.12), tandis que dans la partie supérieure du châssis (5.1) est monté un système de convoyeurs, de préférence un convoyeur latéral de produit (5.2) et un convoyeur coulissant de produit (5.3), ou le convoyeur coulissant de produit (5.3) est relié à l'entraînement par un arbre d'entraînement du convoyeur coulissant (5.4) et une courroie d'entraînement du convoyeur coulissant (5.5), tandis que la plateforme basculante (5.11), dotée de griffes de blocage (5.7) de la palette-caisse (palox), reliées à un vérin des griffes de blocage (5.6), est montée pivotante sur le châssis (5.1) dans le corps d'axe (5.13), tandis que la plateforme basculante (5.11) est reliée à l'entraînement de la plateforme basculante (5.9), de préférence un moteur électrique, par une courroie fixée dans un support de courroie (5.8), passant autour de rouleaux du dévidoir de courroie (5.10).

12. Ligne selon la revendication 1 ou la revendication 11, **caractérisée en ce que** qu'au niveau de la zone des convoyeurs de produit (5.2, 5.3) du système de remplissage du conteneur par le produit (5) est disposé un sous-ensemble de contrôle de la quantité de produit dans le conteneur, comprenant de préférence un capteur analogique ultrasonique, et qu'au niveau de la zone de la plateforme basculante (5.11), de préférence sur sa partie inférieure, sont fixées des roues de positionnement (5.14) du conteneur, en particulier de la palette-caisse (palox), ainsi qu'un capteur de position du conteneur, en particulier de la palette-caisse (palox).

13. Ligne selon la revendication 1 ou la revendication 12, **caractérisée en ce qu'**un convoyeur d'alimentation du produit (6), de préférence un convoyeur à bande à tasseaux, est raccordé au système de remplissage du conteneur par le produit (5).

14. Ligne selon la revendication 1, **caractérisée en ce que** le système d'empilage (7) se compose d'un élévateur (7.8) auquel sont fixées des pinces de préhension (7.10), de préférence reliées à un vérin (7.9) au moyen d'une chaîne de rotation des pinces de préhension (7.11), cet élévateur (7.8) est monté dans le châssis porteur du système d'empilage (7.1), où, dans la partie inférieure du châssis porteur (7.1), est fixé un convoyeur à rouleaux (7.3), tandis que le mécanisme de levage/abaissement de l'élévateur est constitué par l'entraînement de l'élévateur (7.4), de préférence un moteur électrique, la chaîne de l'élévateur (7.5) et un système de rouleaux comprenant au moins un rouleau de guidage (7.6) se déplaçant le long d'un rail de guidage (7.7) fixé au châssis porteur (7.1), ainsi qu'un système de tension comprenant de préférence un tendeur supérieur de la chaîne de l'élévateur (7.15) et un tendeur inférieur de la chaîne de l'élévateur (7.16), ainsi qu'un axe de renvoi de la chaîne de l'élévateur (7.14) et le mécanisme de déplacement des conteneurs, notamment des palettes-caisses (palox), dans le plan horizontal est assuré par un système d'entraînement du convoyeur à rouleaux (7.13) avec une chaîne entraînant les rouleaux du convoyeur à rouleaux (7.12).

15. Ligne selon la revendication 1 ou la revendication 14, **caractérisée en ce que** le convoyeur à rouleaux (7.3) du système d'empilage (7) est relié au convoyeur à rouleaux de sortie (5.12) du système de remplissage du conteneur par le produit (5), en particulier de la caisse-palette (palox).
